# EUROPÄISCHE PATENTSCHRIFT

(11) **EP 0 492 400 B1**
(45) Veröffentlichungstag und Bekanntmachung des Hinweises auf die Patenterteilung: **22.06.1994**
(21) Anmeldenummer: 91121702.4
(22) Anmeldetag: 18.12.1991
(51) Int. Cl.: B01D 19/00, B67D 5/58

(54) **Gasabscheider für die Durchflussmessung von flüssigen Brennstoffen**
Gas separator for a flow meter of liquid fuels
Sépérateur de gaz pour le mesure de débit de combustibles liquides

(30) Priorität: 21.12.1990 DE 4041249
(43) Veröffentlichungstag der Anmeldung: 01.07.1992
(73) Patentinhaber: TANKANLAGEN SALZKOTTEN GMBH, D-33154 Salzkotten (DE)
(72) Erfinder: Hüster, Bernhard, W-4799 Borchen/Alfen (DE)
(74) Vertreter: Zoepke, Carl O.

(56) Entgegenhaltungen:
- DE-A- 1 201 076
- DE-U- 7 302 685
- NL-A- 8 204 774
- US-A- 3 715 863
- US-A- 4 222 751

## Beschreibung

Die Erfindung bezieht sich auf einen Gasabscheider mit den Merkmalen nach dem Oberbegriff des Anspruches 1.

Die Eichbestimmungen für die Durchflußmessung beim Umschlag von flüssigen Brennstoffen an Kraftfahrzeugtankstellen und Tankfahrzeugen schreiben vor, daß unter Einhaltung einer Mindestgenauigkeit gas- oder luftförmige Beimengungen im Brennstoff abgetrennt werden müssen, um zu vermeiden, daß sie mitgemessen werden und das Meßergebnis verfälschen.

Gas- oder Lufteinschlüsse entstehen bei der Entleerung von Behältern durch Unterdruck infolge Strömungswiderständen und Strudelbildung. Hiergegen einsetzbare Gasabscheider sind in vielfältiger Ausführung bekannt.

Gasabscheider mit Beruhigungsräumen, bei denen Gas- oder Luftmengen durch Schwerkraft ausgeschieden und zur Atmosphäre abgeleitet werden, müssen entweder großräumig ausgeführt werden oder können nur für dünnflüssige Medien verwendet werden, wobei als zusätzliche Kontrolle eine Sichtstrecke als Schauglas erforderlich ist.

Bei Zentrifugalabscheidern wird die in Rotation versetzte Flüssigkeit infolge der unterschiedlichen spezifischen Gewichte von den gasförmigen Beimischungen befreit. Diese Gasabscheider verlieren ihre Wirkung bei Förderung von spezifisch leichteren und zähflüssigen Medien, so daß auch hier zur Kontrolle eine Sichtstrecke erforderlich ist.

Bei schwimmergesteuerten Gasabscheidern bilden die mitgeführten Gas- oder Luftmengen mit der zu messenden Flüssigkeit ein spezifisch leichteres Gemisch. Durch die Schwimmerbewegung kann über hydraulische oder elektrische Mittel eine Schalteinrichtung betätigt werden. Auch derartige Gasabscheider benötigen einen vorgeschalteten Beruhigungsraum oder einen Zyklon, wodurch ein derartiges Gas- oder Luftflüssigkeitsgemisch entsteht, in welchem ein auf Schwerkraft reagierender Schaltschwimmer die erforderliche Wirkung verliert.

Aus dem DE-U-73 02 685 ist ein Steuergerät für Gasmeßverhüter bekannt, bei dem ein Diffusor in einem axial beweglichen und durch Gas- oder Lufteinschlüsse anhebbaren Steuerkolben angeordnet ist. Dabei gelangt Schließdruck zu einem Absperrventil hinter dem Gasabscheider, bis der Gasabscheider vollständig entlüftet ist.

Die Verwendung einer Düse, die mit einem federbelasteten verschiebbaren Kolbenschieber eines Steuerkolbens zusammenwirkt, ist aus der DE-B-12 01 076 bekannt. Eine Durchflußmessung bleibt durch ein geschlossenes Absperrventil solange unterbrochen, wie Gas- oder Luftblasen in der zu messenden Flüssigkeit enthalten sind.

Bei einer aus der NL-A-82 04 774 bekannten Bauart ist die Druckseite der Förderpumpe an einen horizontalen Zyklonabscheider angeschlossen, der die von der Pumpe beim Tankvorgang eines Kraftfahrzeugs zugeführte Flüssigkeit, welche einen kleinen Prozentsatz Luft oder Gase enthalten kann, zu einer schraubenförmigen Strömung durchwirbelt. Die leichteren, sich im Innenbereich der Strömungsschraube sammelnden Luftblasen werden von einem horizontalen Trennrohr erfaßt, das über eine Entlüftungsöffnung in einer Entlüftungskammer mündet. Die auf diese Weise abgeschiedene Gas- oder Luftbeimischung verläßt die Entlüftungskammer über eine obere Abluftöffnung.

Eine Steuerung des Auslaßventils ist bei diesem bekannten Gasabscheider nicht vorgesehen, insbesondere werden keine Ein- und Ausschaltvorgänge beim Erreichen bestimmter Gas- oder Lufteinschlußmengen hervorgerufen.

Der Erfindung liegt die Aufgabe zugrunde, bei einem Gasabscheider der eingangs genannten Art das Auslaßventil vor der Meß- und Abgabeeinrichtung, insbesondere vor dem Zählwerk der Anlage, beim Auftreten von Gas- oder Luftbeimischungen im flüssigen Brennstoff schneller als bei bisher bekannten Anlagen und insbesondere bei der Förderung und Abgabe von zähflüssigerem Kraftstoff, wie Dieselkraftstoff, abschalten zu können, um Meßfehler sofort zu eliminieren, die von Gas- oder Lufteinschlüssen herbeigeführt werden könnten.

Diese Aufgabe wird erfindungsgemäß mit den im kennzeichnenden Teil des Anspruches 1 angegebenen Merkmalen gelöst.

Es wird hierdurch der wesentliche Vorteil erzielt, daß sich durch ein Entspannen von Gas- oder Luftbeimischungen hinter einem einfachen, fest eingebauten Diffusor gegen einen glockenförmigen Verdrängungskörper eine hohe Ansprechgeschwindigkeit des Gasabscheiders auf vorkommende Beimischungen ergibt.

Weitere Einzelheiten der Erfindung ergeben sich aus den Unteransprüchen.

Ein in der Beschreibung näher erläutertes Ausführungsbeispiel des Gasabscheiders für die Durchflußmessung von flüssigen Brennstoffen nach der Erfindung ist in der Zeichnung wiedergegeben; es zeigt
- Bild 1: eine schematisch gehaltene Schnittdarstellung eines Gasabscheiders nach der Erfindung;
- Bild 2: eine mit Bild 1 vergleichbare Darstellung mit einer Einzelheit im Bereich der Auftriebskörper.

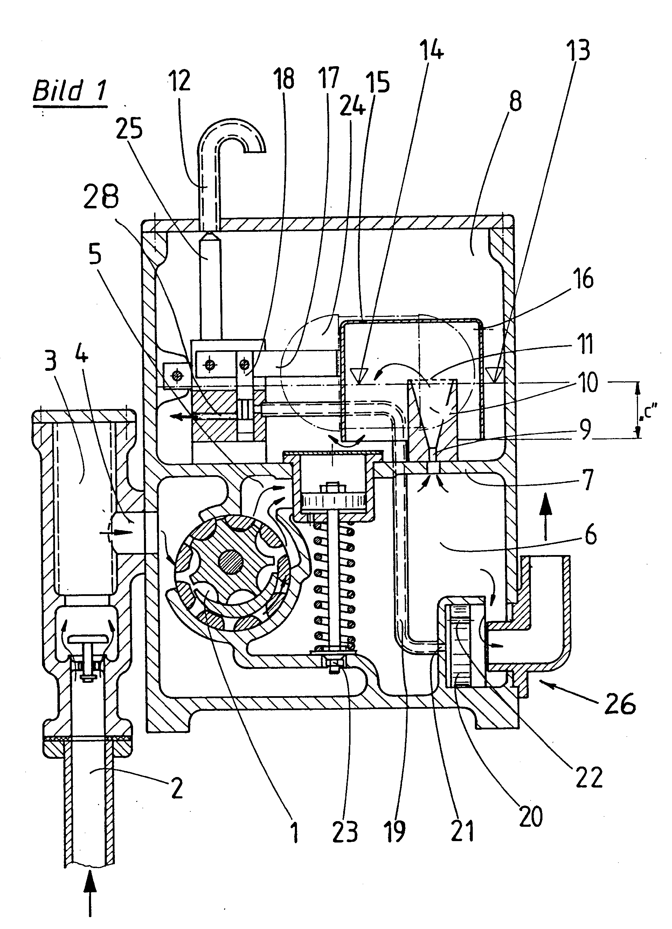

Wie Fig. 1 zeigt, wird flüssiger Brennstoff mittels einer Förderpumpe 1 über eine Saugleitung 2, ein Filter 3 und einen Kanal 4 aus einem in der Zeichnung nicht dargestellten Behälter angesaugt, welcher im Bereich beispielsweise einer Kraftfahrzeugtankstelle unterirdisch angeordnet oder auf einem Tankfahrzeug gelagert sein kann.

Auf der Druckseite der Förderpumpe 1 gelangt der Brennstoff über einen Pumpenaustrittskanal 5 in die Beruhigungskammer 6 eines Gasabscheiders. Der flüssige Brennstoff kann mit Gas oder Luft vermischt sein. In der Beruhigungskammer 6 fließt die klare Flüssigkeit nach unten; dagegen bewegen sich die Gas- oder Luftmengen, die noch mit Flüssigkeit vermischt sind, nach oben. Durch einen Zwischenboden 7, der die Beruhigungskammer 6 gegenüber einem darüber angeordneten Schwimmerraum 8 begrenzt, werden diese Gas- oder Luftmengen durch den Pumpendruck der Förderpumpe 1 auf deren Förderdruck verdichtet.

Im Zwischenboden 7 ist eine Gasabscheiderdüse 9 vorgesehen, welche die Beruhigungskammer 6 des Gasabscheiders mit dem Schwimmerraum 8 verbindet und an die sich im Schwimmerraum unmittelbar ein Diffusor 10 anschließt, in dessen Austrittsquerschnitt ein Sieb 11 angeordnet ist, welches einen homogenen Rücklauf der klaren Flüssigkeit über die Oberkante des Diffusors 10 gewährleistet und eine Strahlbildung verhindert. Über eine Rohrleitung 12 ist der Schwimmerraum 8 mit der Atmosphäre verbunden.

Das Gas- oder Flüssigkeitsgemisch fängt sich in der Gasabscheiderdüse 9 und tritt durch diese und den Diffusor 10 in den Schwimmerraum 8 ein. Gas oder Luft gelangt über die Rohrleitung 12 in die Atmosphäre. Die hinter der Gasabscheiderdüse 9 austretenden Gas- oder Luftmengen unterliegen im Diffusor 10 aufgrund des konstant bleibenden Produkts aus Druck und Geschwindigkeit einer Volumenzunahme, d.h., mit zunehmender Entfernung vom Eintrittsquerschnitt des Diffusors 10 verringert sich die Strömungsgeschwindigkeit und erhöht sich das Volumen der sich entspannenden Gas- oder Luftmengen.

Bei normalem Förderbetrieb der Förderpumpe 1 wird die Gasabscheiderdüse 9 von einer klaren Flüssigkeit durchflossen, die den Diffusor 10 an seiner Oberkante am Sieb 11 als Überlauf verläßt und einen Flüssigkeitsspiegel 14 bildet.

Oberhalb des Diffusors 10 taucht in den Flüssigkeitsspiegel 14 ein unten offener, glockenförmiger Verdrängungskörper 15 ein. Während des Überlaufs klarer Flüssigkeit an der Oberkante des Diffusors 10 findet über die offene Unterkante des Verdrängungskörpers 15 ein Flüssigkeitsausgleich statt, so daß sich der Flüssigkeitsspiegel 14 auf gleicher Höhe des Flüssigkeitsspiegels 13 im Schwimmerraum 8 einstellt. Ebenso kann sich der Druck der beim Überlauf von klarer Flüssigkeit verdrängten Luft im Verdrängungskörper 15 über eine darin oberhalb des Flüssigkeitsspiegels 13, 14 vorgesehene Bohrung 16 ausgleichen, die mit dem Schwimmerraum 8 und über die Rohrleitung 12 mit der Atmosphäre verbunden ist.

Sobald von der Förderpumpe 1 Gase angesaugt und in die Beruhigungskammer 6 gefördert werden, treten diese, mit oder ohne Flüssigkeit vermischt, nach Durchgang durch die Gasabscheiderdüse 9 und den Diffusor 10 am Sieb 11 in den oberen Teil des glockenförmigen Verdrängerkörpers 15 aus. Da sie über die Bohrung 16 nur langsam entweichen können, entsteht oberhalb des Flüssigkeitsspiegels 14 ein Überdruck, durch den der glockenförmige Verdrängungskörper 15 angehoben wird, bis dieser mit seiner Unterkante oberhalb des Flüssigkeitsspiegels 14 zu liegen kommt und in dieser Stellung verharrt, solange Gas oder Luft aus dem Diffusor 10 austritt. Der hydrostatische Gegendruck des Flüssigkeitsspiegels 14 entspricht hierbei der Eintauchtiefe "C" des Verdrängungskörpers 15 in seiner Grundstellung.

Der glockenförmige Verdrängungskörper 15 und ein mit diesem verbundener Schwimmer 24 sind über ein Hebelgestänge 17 mit einem Pilotventil 18 verbunden, dessen Schieber über einen Ringkanal in der Stellung nach Fig. 1 für normalen Förderbetrieb eine das Ventilgehäuse durchsetzende Entlastungsbohrung 28 mit einer Rohrleitung 19 verbindet, die zur Rückseite 21 des Schließkolbens 20 eines in der Beruhigungskammer 6 angeordneten Auslaßventils 26 führt.

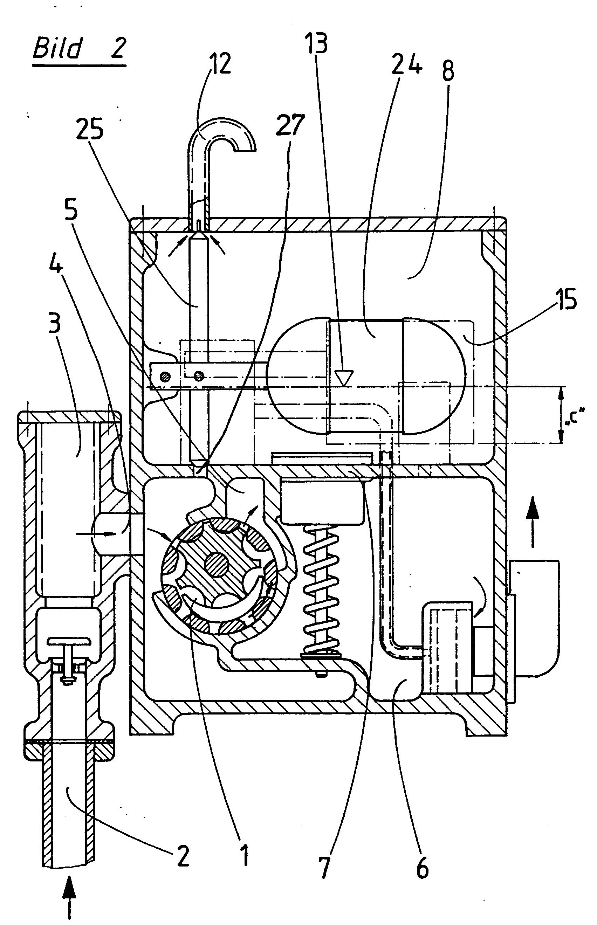

Bei normalem Förderbetrieb ist das Auslaßventil 26 geöffnet; die unter Förderdruck der Pumpe 1 stehende Flüssigkeit in der Kammer 6 fließt durch eine den Schließkolben 20 durchsetzende Ausgleichsbohrung 22 zur Kolbenrückseite 21 und durch die Rohrleitung 19 über den Ringkanal des Schiebers im Pilotventil 18 und die Entlastungsbohrung 28 in Richtung des in Fig. 1 angedeuteten Pfeils in den Schwimmerraum 8 und von dort über eine in Fig. 2 dargestellte Bohrung 27 im Zwischenboden 7 zurück zur Saugseite der Förderpumpe 1. Unterhalb der Rohrleitung 12 und mit dieser fluchtend sitzt auf dieser Bohrung 27 ein Ventilkörper 25, der den Flüssigkeitsspiegel 13 im Schwimmerraum 8 konstant hält, indem er immer so viel Flüssigkeit zurückfließen läßt wie am Uberlauf in den Schwimmerraum 8 einfließt.

Sobald durch den Uberdruck der angesaugten Gase der Verdrängungskörper 15 ausreichend angehoben worden ist, unterbricht der Schieber des Pilotventils 18 den Flüssigkeitsrückfluß von der Rohrleitung 19 zur Entlastungsbohrung 28 und aus der Beruhigungskammer 6 gelangt Flüssigkeit über die Ausgleichsöffnung 22 zur Rückseite 21 des Schließkolbens 20.

Sobald alle Gas- oder Luftbeimischungen ausgetrieben sind, senkt sich der Verdrängungskörper 15, wodurch sich über das entsprechend verstellte Pilotventil 18 und die Rohrleitung 19 der Druck hinter dem Schließkolben 20 abbaut und der Hauptförderstrom wieder freigegeben wird.

Am Zwischenboden 7 ist ein kolbengesteuertes Bypass-Ventil 23 angeflanscht, über das während des Entlüftungsvorgangs der Flüssigkeitsdruck in der Beruhigungskammer 6 auf die Saugseite der Förderpumpe 1 zurückgeführt wird. Gleichgültig, ob während eines Entlüftugnsvorganges das Auslaßventil 26 geschlossen ist oder ob das Zapfventil an der Zapfsäule eingehängt ist, bewirkt dieses Bypass-Ventil 23 bei Neutralumlauf der Förderpumpe den Abbau von Überdruck. Seine Einstellung ist abhängig vom allgemeinen Anlagedruck.

## Patentansprüche

1. Gasabscheider für die Durchflußmessung von flüssigen Brennstoffen an eichfähigen Meß- und Abgabeeinrichtungen mit einer Förderpumpe (1), einem Auslaßventil (26), einer Beruhigungskammer (6) und einer diese zu einem Diffusor (10) öffnenden Gasabscheiderdüse (9), dadurch gekennzeichnet, daß ein glockenförmiger Verdrängungskörper (15) oberhalb des fest eingebauten Diffusors (10) beim Fördern von gas- oder luftfreier Flüssigkeit mit konstanter Tiefe (C) in die in einem Schwimmerraum (8) befindliche Flüssigkeit eintaucht und hierbei ein Pilotventil (18) öffnet, so daß der Schließkolben (20) des Auslaßventils (26), der eine Ausgleichsöffnung (22) aufweist, durch Flüssigkeitsrückfluß von seiner Kolbenrückseite (21) über eine Rohrleitung (19) zum Pilotventil (18) hydraulisch entlastet wird, und beim Fördern von Gas- oder Luftflüssigkeitsgemischen durch das sich entspannende Gas anhebbar ist und hierbei das Pilotventil (18) für einen Flüssigkeitsrückfluß schließt.

2. Gasabscheider nach Anspruch 1, dadurch gekennzeichnet, daß der Schieber des Pilotventils (18) einen ringförmigen Steuerkanal zur Verbindung des Schwimmerraums (8) mit der Rohrleitung (19) aufweist.

3. Gasabscheider nach Anspruch 1, dadurch gekennzeichnet, daß an der oberen Kante des Verdrängungskörpers (15) eine in den Schwimmerraum (8) mündende Bohrung (16) zur Entlüftung bei normalem Förderbetrieb angeordnet ist.

4. Gasabscheider nach Anspruch 1, dadurch gekennzeichnet, daß der Schwimmerraum (8) eine in die freie Atmosphäre führende Rohrleitung (12) aufweist.

5. Gasabscheider nach Anspruch 1, dadurch gekennzeichnet, daß der Austrittsquerschnitt des Diffusors (10) mit einem Sieb (11) abgedeckt ist.

6. Gasabscheider nach Anspruch 1, dadurch gekennzeichnet, daß die Saug- und die Druckseite der Förderpumpe (1) durch ein kolbengesteuertes Bypass-Ventil (23) überbrückt ist, welches unter Überdruckbedingungen zur Saugseite der Förderpumpe (1) hin öffnet.

7. Gasabscheider nach Anspruch 1, dadurch gekennzeichnet, daß der Verdrängungskörper (15) mit einem dessen normale Eintauchtiefe bestimmenden Schwimmer (24) gekoppelt ist.

8. Gasabscheider nach Anspruch 2, dadurch gekennzeichnet, daß das Pilotventil (18) mit dem Verdrängungskörper (15) über ein Hebelgestänge (17) verbunden ist, welches endseitig an der Innenwand des Schwimmergehäuses (8) angelenkt ist.

9. Gasabscheider nach Anspruch 1, dadurch gekennzeichnet, daß im Ventilgehäuse des Pilotventils (8) eine Entlastungsbohrung (28) vorgesehen ist.

10. Gasabscheider nach Anspruch 8, dadurch gekennzeichnet, daß das Hebelgestänge (17) ein eine vertikale Hubbewegung des Verdrängungskörpers (15) ermöglichendes Parallelogrammgestänge aufweist.

11. Gasabscheider nach Anspruch 1, dadurch gekennzeichnet, daß die Gasabscheiderdüse (9) zylindrischen oder konischen Querschnitt aufweist.

12. Gasabscheider nach Anspruch 11, dadurch gekennzeichnet, daß zur Einstellung der Ansprechgeschwindigkeit des Verdrängungskörpers (15) die Gasabscheiderdüse (9) in ihrem Querschnitt veränderbar ist.

## Claims

1. Gas separator for the flow measurement of liquid fuels to measurement and discharge devices which can be calibrated, having a feed pump (1), an outlet valve (26), a smoothing chamber (6) and a gas separator nozzle (9) which opens the latter to a diffuser (10), characterized in that a bell-shaped displacement body (15) above the fixedly installed diffuser (10) dips at a constant depth (C) into the liquid in a float chamber (8) when gas- or air-free liquid is fed and thus opens a pilot valve (18) so that the closing piston (20) of the outlet valve (26), which has a relieving opening (22), is relieved hydraulically by liquid flowing back from its piston rear side (21) by way of a line (19) to the pilot valve (18), and when gas/liquid or air/liquid mixtures are fed the bell-shaped displacement body (15) can be raised by the relaxing gas and thus closes the pilot valve (18) for liquid to flow back.

2. Gas separator according to Claim 1, characterized in that the slide of the pilot valve (18) has an annular control channel for connecting the float chamber (8) to the line (19).

3. Gas separator according to Claim 1, characterized in that a bore (16) opening into the float chamber (8) is arranged at the upper edge of the displacement body (15) for venting during normal feed operation.

4. Gas separator according to Claim 1, characterized in that the float chamber (8) has a line (12) leading to the outside atmosphere.

5. Gas separator according to Claim 1, characterized in that the outlet cross-section of the diffuser (10) is covered by a screen (11).

6. Gas separator according to Claim 1, characterized in that the suction and the pressure side feed pump (1) are bridged by a piston-controlled bypass valve (23) which opens towards the suction side of the feed pump (1) under excess pressure conditions.

7. Gas separator according to Claim 1, characterized in that the displacement body (15) is coupled to a float (24) which determines its normal depth of dipping.

8. Gas separator according to Claim 2, characterized in that the pilot valve (18) is connected to the displacement body (15) by way of a lever linkage (17) which is linked at the end to the inner wall of the float casing (8).

9. Gas separator according to Claim 1, characterized in that a relief bore (28) is provided in the valve casing of the pilot valve (8).

10. Gas separator according to Claim 8, characterized in that the lever linkage (17) has a parallelogram linkage which makes possible a vertical stroke movement of the displacement body (15).

11. Gas separator according to Claim 1, characterized in that the gas separator nozzle (9) has a cylindrical or conical cross-section.

12. Gas separator according to Claim 11, characterized in that to adjust the response rate of the displacement body (15) the gas separator nozzle (9) can be altered in its cross-section.

## Revendications

1. Séparateur de gaz pour la mesure de débit de combustibles solides sur des appareils de mesure et de distribution prévus pour une vérification officielle, comportant une pompe de débit (1), une soupape de sortie (26), une chambre de tranquillisation (6) et un ajutage séparateur de gaz (9) qui fait communiquer cette chambre de tranquillisation avec un diffuseur (10), caractérisé en ce qu'il comporte un corps flottant en forme de cloche (15) disposé au-dessus du diffuseur (10) qui est monté à poste fixe, ce flotteur (15) étant enfoncé d'une profondeur constante (C) dans le liquide contenu dans une chambre (8) du flotteur, lorsqu'on débite un liquide exempt de gaz ou d'air, le flotteur assurant ainsi l'ouverture d'une soupape pilote (18), si bien que le piston obturateur (20) de la soupape de sortie (26), qui comporte un orifice d'équilibrage (22), est hydrauliquement déchargé par le reflux du liquide allant de la face postérieure (21) de son piston à la soupape pilote (18) par l'intermédiaire d'une canalisation tubulaire (19), alors que, en présence de gaz ou d'air mélangé au liquide, le flotteur tend à se soulever sous l'effet de la détente du gaz, fermant ainsi la soupape pilote (18) pour un reflux du liquide.

2. Séparateur de gaz selon la revendication 1, caractérisé en ce que le coulisseau de la soupape pilote (18) est pourvu d'un canal de commande annulaire pour relier la chambre (8) du flotteur à la canalisation tubulaire (19).

3. Séparateur de gaz selon la revendication 1, caractérisé en ce que le flotteur (15) comporte à l'endroit de son bord supérieur un trou (16) qui débouche dans la chambre (8) du flotteur pour assurer le dégazage en débit normal.

4. Séparateur de gaz selon la revendication 1, caractérisé en ce que la chambre (8) du flotteur comporte une canalisation tubulaire (12) qui débouche à l'atmosphère libre.

5. Séparateur de gaz selon la revendication 1, caractérisé en ce que l'orifice de sortie du diffuseur (10) est recouvert par un filtre (11).

6. Séparateur de gaz selon la revendication 1, caractérisé en ce que l'aspiration et le refoulement de la pompe de débit (1) sont court-circuités par une soupape de by-pass (23) pilotée par un piston, cette soupape s'ouvrant vers l'aspiration de la pompe de débit (1) en cas de surpression.

7. Séparateur de gaz selon la revendication 1, caractérisé en ce que le corps flottant (15) est accouplé à un flotteur auxiliaire (24) qui détermine la profondeur normale d'enfoncement de ce corps.

8. Séparateur de gaz selon la revendication 2, caractérisé en ce que la soupape-pilote (18) est reliée au corps flottant (15) par un système de leviers articulés (17) dont une extrémité est fixée de manière pivotante sur la face interne de la paroi de la chambre (8) du flotteur.

9. Séparateur de gaz selon la revendication 1, caractérisé en ce qu'un trou de décharge (28) est prévu dans le corps de la soupape-pilote (8).

10. Séparateur de gaz selon la revendication 8, caractérisé en ce que le système de leviers articulés (17) comporte un parallélogramme articulé qui permet un mouvement de soulèvement vertical du corps flottant (15).

11. Séparateur de gaz selon la revendication 1, caractérisé en ce que l'ajutage de dégazage (9) présente une section cylindrique ou conique.

12. Séparateur de gaz selon la revendication 11, caractérisé en ce que la section de l'ajutage de dégazage (9) est réglable pour permettre de régler la vitesse de réponse du corps flottant (15).
